# EUROPEAN PATENT APPLICATION

(11) **EP 4 542 740 A2**
(43) Date of publication of application: **23.04.2025**
(21) Application number: 24206529.0
(22) Date of filing: 14.10.2024
(51) Int. Cl.: H01M 50/179, H01M 50/191, H01M 50/197

(54) **BATTERY CURRENT COLLECTOR PLATE AND BATTERY**

(30) Priority: 19.10.2023 CN 202322815222 U
(71) Applicant: Techtronic Cordless GP, Anderson, SC 29621 (US)
(72) Inventor: LI, Jin Wei, Dongguan City (CN); GENG, Dan, Dongguan City (CN)
(74) Representative: Novagraaf Group

(57) **Abstract**

The present utility model provides a battery current collector plate and a battery, the current collector plate comprising a current collector plate body and a weld zone, the current collector plate body having a first face for contacting a rolled core, and a second face opposite the first face; at least a portion of the second face is provided with the weld zone, and the weld zone has a lower laser reflectivity than the first face. In the present utility model, the weld zone of low laser reflectivity is provided on the current collector plate, such that a surface of the current collector plate absorbs laser energy more effectively, thereby increasing the efficiency and precision of welding. At the same time, the weld zone of low laser reflectivity can also reduce the temperature and the amount of heat generated during laser welding, thereby safeguarding the performance and stability of a rolled core assembly.

## Description

### Technical field

The present utility model relates to the field of novel battery production, in particular to a battery current collector plate and a battery.

### Background art

Battery laser welding is a highly precise welding technique that is widely used in battery manufacturing and assembly processes, for example to connect a current collector plate to a rolled core by welding. The principle of laser welding is to use a high-energy laser beam to heat a welding material, so that a surface thereof melts, and forms a stable welded connection after cooling. Compared with conventional resistance welding or ultrasonic welding, laser welding has advantages such as fast welding speed, high weld quality, and not causing thermal damage to surrounding material.

In the course of production, research and practical implementation, the inventors have found that despite the abovementioned advantages of laser welding, it is sometimes difficult to guarantee the result when laser welding a current collector plate to a rolled core; the quality of the weld is less than ideal, and the problem of weld spots not being fused, or not being fully fused, may even occur. The welding speed needs to be increased to compensate, but too fast a welding speed will result in a drop in weld quality. Thus, there is an urgent need to find the cause of poor laser welding quality, as well as a solution.

Furthermore, batteries will sometimes overheat, resulting in explosion of the rolled core, etc. The cause of this phenomenon still needs further research.

### Summary of the Utility Model

One aspect of the present utility model provides a battery current collector plate, with a weld zone of low laser reflectivity provided on the current collector plate, such that a surface of the current collector plate absorbs laser energy more effectively, thereby increasing the efficiency and precision of welding. At the same time, the weld zone of low laser reflectivity can also reduce the temperature and the amount of heat generated during laser welding, thereby safeguarding the performance and stability of a rolled core assembly.

One aspect of the present utility model provides a battery current collector plate; the current collector plate comprises a current collector plate body, the current collector plate body having a first face for contacting an end of a rolled core, and a second face opposite the first face;
at least a portion of the second face is provided with a weld zone, the weld zone being configured to cause a portion of the first face corresponding to the weld zone to be connected by welding to the end of the rolled core when the weld zone is irradiated by laser light;
the weld zone has a lower laser reflectivity than the first face.

In some embodiments, the weld zone is hydrophilic.

In some embodiments, the weld zone (2) is at least a portion of the second face (12) that has undergone a hydrophilic treatment, the hydrophilic treatment comprising applying a plating layer, a spray-coating layer, a dip-coating layer or a bonded layer, performing a plasma treatment, and/or performing an oxidation treatment.

In some embodiments, a material of the plating layer, spray-coating layer, dip-coating layer or bonded layer is selected from an inorganic material, the inorganic material being selected from one or more of magnesium oxide, silicon oxide, zirconium oxide, titanate and magnesium aluminum fluoride;
a material of the current collector plate body is selected from copper, tin or aluminum.

In some embodiments, an axial hole is provided in a middle part of the current collector plate body, the weld zone being arranged around the axial hole.

In some embodiments, the weld zone is multiple weld zones, which are distributed at an outer side of the axial hole in a centrosymmetric manner.

In some embodiments, the current collector plate further comprises a current-leading plate for leading out current, the current-leading plate being connected to the current collector plate body.

In some embodiments, the current-leading plate also comprises a weld zone.

In some embodiments, the weld zone of the current-leading plate and the weld zone of the second face are located on the same side or opposite sides of the current collector plate.

In some embodiments, the current-leading plate is connected to the current collector plate body by means of a folded current-leading region, the folded current-leading region being provided with a fusible region with a reduced current-conducting area.

In some embodiments, the folded current-leading region comprises a first fold region, a second fold region and a connecting region; the first fold region foldably connects the connecting region and the current-leading plate, and the second fold region foldably connects the connecting region and the current collector plate body.

In some embodiments, the first fold region and/or the second fold region is/are provided with a through-hole, the through-hole extending to a portion adjoining the first fold region and/or the second fold region, wherein the adjoining portion may be the current-leading plate, the connecting region and the current collector plate body;
when the folded current-leading region is in a folded state, at least a partial region of the through-hole overlaps the axial hole of the current collector plate body in an axial direction.

Another aspect of the present utility model provides a battery, the battery comprising a rolled core and the current collector plate, the current collector plate being connected to an end of the rolled core by laser welding.

In some embodiments, multiple weld spots are formed on the current collector plate by irradiation with laser light, the multiple weld spots being discrete weld spots forming multiple rows.

In some embodiments, multiple weld spots are formed on the current collector plate, the multiple weld spots being consecutive weld spots, and forming a straight line, an S shape or a U shape.

Another aspect of the present utility model provides a method for preparing the current collector plate described above.

In some embodiments, a method for preparing a current collector plate for laser welding comprises: subjecting a second face of a current collector plate body to hydrophilic treatment to form a weld zone.

In some embodiments, the hydrophilic treatment for example comprises the following steps: making up a weld zone inorganic coating; optionally subjecting the second face of the current collector plate body to a passivation treatment, for example polishing or etching, etc.; then putting the inorganic coating on a surface of the second face of the current collector plate body, for example using a method such as film-coating, spray-coating, dip-coating or bonding; then curing the inorganic coating, for example drying for 10 - 14 hours at a temperature of 80 - 120°C, such that a dispersion medium volatilizes, to obtain a weld zone formed on the second face of the current collector plate body.

In some embodiments, the inorganic coating is selected from one or more of magnesium oxide, silicon oxide, zirconium oxide, titanate and magnesium aluminum fluoride.

Another aspect of the present utility model provides a method for preparing a battery.

In an embodiment, the current collector plate described above may be arranged at a positive electrode or a negative electrode of the battery.

In an embodiment, the current collector plate described above is arranged at the negative electrode of the battery, and the preparation method specifically comprises the following steps: stacking a casing, a negative electrode current collector plate and a rolled core, and performing a laser welding operation; fitting the first face of the current collector plate body in any one of the embodiments above to a positive electrode end of the rolled core, wherein an axis of the rolled core is aligned with an axial hole of the current collector plate body and tight pressing is performed; subjecting the weld zone of the second face of the current collector plate body to a laser welding operation; and injecting electrolyte into the rolled core.

In an embodiment, the preparation method further comprises: bending a first fold region and a second fold region in opposite directions, so as to fold the current collector plate body and a current-leading plate; covering the top of the current-leading plate with a positive electrode terminal and sealing the battery.

### Brief description of the drawings

To better understand the above and other objectives, features, advantages and functions of the present utility model, the preferred embodiments shown in the drawings may be referred to. In the drawings, identical reference signs denote identical components. Those skilled in the art should understand that the drawings are intended to clarify schematically preferred embodiments of the present utility model, without limiting the scope of the present utility model in any way, and the various components in the drawings are not drawn to scale.
Fig. 1 shows a structural schematic drawing of a current collector plate according to an aspect of the present utility model, and the way in which it is arranged in relation to a rolled core.
Figs. 2-3 show structural schematic drawings of a current collector plate according to an aspect of the present utility model.
Figs. 4-5 show structural schematic drawings of a current collector plate according to another aspect of the present utility model.
Figs. 6 - 7 show structural schematic drawings of a current collector plate according to another aspect of the present utility model.
Fig. 8 shows an exploded schematic drawing of a battery according to the present utility model.

### Key to the drawings

1 - current collector plate body
11 - first face
12 - second face
13 - axial hole
14 - weld spot
2 - weld zone
3 - current-leading plate
31 - first fold region
32 - second fold region
33 - connecting region
34 - through-hole
100 - rolled core
200 - current collector plate

### Detailed description of embodiments

Before any embodiment is explained in detail, it should be understood that applications of embodiments are not limited to the details of the configurations and arrangements of components expounded in the description below or shown in the drawings. Embodiments may be put into practice or implemented in various ways. The embodiments described here are merely preferred embodiments according to the present utility model; based on these preferred embodiments, those skilled in the art will be able to think of other solutions capable of realizing the present utility model, which likewise fall within the scope of the present utility model.

Unless otherwise defined, all technical and scientific terms used in the present utility model have the same meanings as commonly understood by those skilled in the art. In case of conflict, the present utility model (including definitions) shall prevail. Only exemplary methods and materials are described below; methods and materials similar or equivalent to those described in the present utility model may be used in experiments or tests of the present utility model. The materials, methods and examples disclosed in the present utility model are merely illustrative, and not intended to be limiting. The statement of a numerical range in the present utility model explicitly allows for every intermediate number with the same precision within said range.

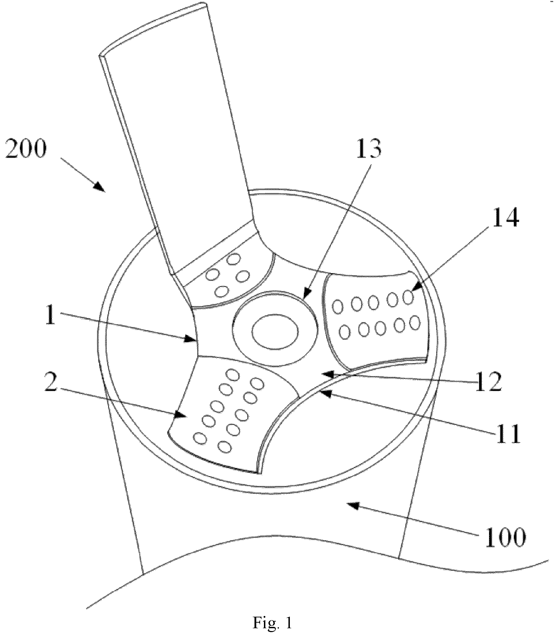

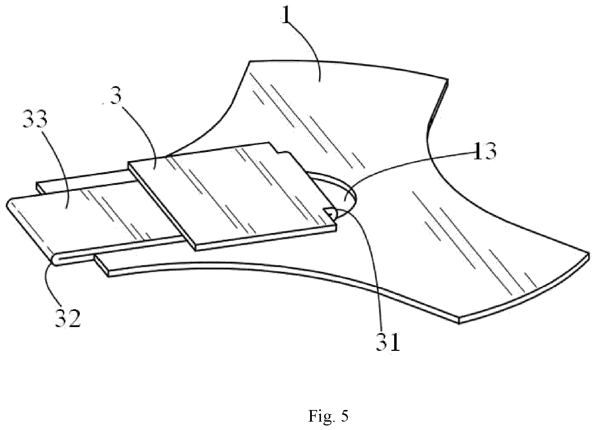

Figs. 1-8 show a battery current collector plate according to the present utility model. It should first be explained that the directional and positional terms in the present utility model should be understood to mean relative directions and positions, rather than absolute directions and positions. The directional and positional terms in the present utility model can be explained with reference to the exemplary structures shown in Figs. 1-8.

In the course of production, research and practical implementation, the inventors found that the problem of reduced weld quality will occasionally occur in the process of laser welding current collector plates. After eliminating a large number of causes, it was found that in an existing laser welding process, slight differences in the laser reflectivity of the current collector plate surface across different batches will result in reflection and scattering of much of the laser energy at the metal surface; consequently, full utilization of the laser energy is not possible, and the problem of weld spots not being fused, or not being fully fused, may even occur, resulting in a drop in production yield.

In response to the above technical problem, the present utility model provides a battery current collector plate, which can avoid the above problems. Now referring to Figs. 1 - 7, a preferred embodiment of the present utility model provides a battery current collector plate, the current collector plate 200 comprising a current collector plate body 1, the current collector plate body 1 having a first face 11 for contacting an end of a rolled core 100, and a second face 12 opposite the first face 11; at least a portion of the second face 12 is provided with a weld zone 2, the weld zone 2 being configured to cause a portion of the first face 11 corresponding to the weld zone 2 to be connected by welding to the end of the rolled core 100 when the weld zone is irradiated by laser light; and the weld zone 2 has a lower laser reflectivity than the first face 11.

In general, opposite surfaces of a current collector plate 200 have similar laser reflectivities; to reduce the reflection of laser light for welded surfaces during laser welding, the weld zone 2 with lower reflectivity is used to cover the second face 12, thus achieving the convergence of energy and reducing dissipation, and increasing the stability of the laser welding process, preventing the problems caused by differences in current collector plate surface reflectivity across different batches, and increasing the production yield.

In the present utility model, the first face 11 and the second face 12 are opposite each other; the first face is configured to contact the rolled core 100, while the second face 12 is at the back of the first face 11, and configured to contact an end of an electrode. For details, the illustrative positions in Fig. 1 may be referred to.

Any existing usable material may be chosen as a material of the current collector plate; in an embodiment, a material of the current collector plate body 1 is selected from copper, tin or aluminum.

The weld zone 2 is provided in the present utility model so that the laser reflectivity of the current collector plate surface is reduced and substantially the same, preventing a drop in production yield due to deviation across different batches. In an embodiment, the weld zone 2 is hydrophilic; for example, the weld zone 2 is at least a portion of the second face 12 that has undergone a hydrophilic treatment. As a result of subjecting a surface of the second face 12 to hydrophilic treatment to form the weld zone 2, the hydrophilicity thereof is greater than that of a surface (e.g. the second face 12) of the current collector plate body 1, and at the same time, the laser reflectivity is reduced. The hydrophilic treatment is related to the laser reflectivity of the second face 12; in general, a smoother flat surface has lower hydrophilicity (e.g. smooth glass), whereas a rougher flat surface has higher hydrophilicity (e.g. frosted glass). Increasing the hydrophilicity (roughness) of the weld zone by hydrophilic treatment achieves the effect of reducing the laser reflectivity.

In some embodiments, the hydrophilic treatment comprises applying a plating layer, a spray-coating layer, a dip-coating layer or a bonded layer, performing a plasma treatment, and/or performing an oxidation treatment. The weld zone 2 may be provided on the surface of the second face 12 by a known method; generally, materials and/or methods that reduce the laser reflectivity are preferred.

In an embodiment, the hydrophilic coating is insulating, and will not react with electrolyte, and furthermore, will not produce other impurities during welding. Therefore, the hydrophilic surface coating is more preferably an inorganic material treatment layer; an organic material is generally not preferred, due to the fact that it will undergo carbonization and produce impurities during high-temperature welding.

In an embodiment, a material of the plating layer, spray-coating layer, dip-coating layer or bonded layer is selected from inorganic metal materials and inorganic non-metal materials, wherein inorganic metal materials include but are not limited to one or more of the group consisting of the following: magnesium oxide, silicon oxide, zirconium oxide, titanate, magnesium aluminum fluoride, etc.; and inorganic non-metal materials include but are not limited to the group consisting of the following: diatomite, kaolin, glass, ceramic, etc.

The method of measuring the laser reflectivity is known in the art; for example, a reflectivity measuring instrument is used for measurement. In an embodiment, the laser reflectivity of the weld zone 2 is lower than 70% of the laser reflectivity of the first face 11; in a preferred embodiment, the laser reflectivity of the weld zone 2 is lower than 60% of the laser reflectivity of the first face 11; in a more preferred embodiment, the laser reflectivity of the weld zone 2 is lower than 50% of the laser reflectivity of the first face 11; and in a most preferred embodiment, the laser reflectivity of the weld zone 2 is lower than 40% of the laser reflectivity of the first face 11.

In general, if the current collector plate body has not undergone special treatment, the laser reflectivities of the first face 11 and the second face 12 thereof should be the same or essentially the same (differing by preferably ±10%, more preferably ±5%, and further preferably ±2%). Therefore, in the case where the second face 12 is completely covered by the weld zone 2, measurement and comparison of the laser reflectivities of the first face 11 and the weld zone 2 is more convenient and quicker.

The dimensions of the current collector plate may be set according to actual production needs, and adjusted according to the dimensions of the battery. In an embodiment, the current collector plate has a thickness of 0.1 - 0.5 mm, preferably 0.1 - 0.3 mm, more preferably 0.15 - 0.25 mm, and most preferably 0.18 - 0.22 mm.

The thickness of the weld zone 2 is not subj ect to any particular requirements, but should not be too thick, in which case penetration by laser light would be affected, and should not be too thin, in which case the absorption of laser light would be affected. In an embodiment, the thickness of the weld zone 2 is less than 10% of the thickness of the current collector plate body 1, preferably less than 8% of the thickness of the current collector plate body 1, more preferably less than 5% of the thickness of the current collector plate body 1, and most preferably less than 3% of the thickness of the current collector plate body 1.

In an embodiment, referring to Figs. 1 - 7, an axial hole 13 is provided in a middle part of the current collector plate body 1, with the weld zone 2 being arranged around the axial hole 13. The function of the axial hole is to facilitate the injection of electrolyte into the battery. During welding, the axial hole 13 is aligned with a central hole of the rolled core 100, to facilitate the injection of electrolyte in a subsequent battery installation process. Preferably, the weld zone 2 may partially cover the entire second face 12, or may completely cover the entire second face 12, so as to provide reduced surface reflection of laser light during laser welding, and thereby reduce energy consumption. At the same time, there are multiple weld zones 2, which are distributed at an outer side around the axial hole 13 in a centrosymmetric manner, to ensure that the binding force of the weld between the current collector plate 200 and the rolled core 100 is uniformly distributed, e.g. distributed in a triangle as shown in Figs. 1 - 7.

In an embodiment, the weld zone may be connected to the end of the rolled core by electric welding or by whole-body welding. Preferably, each weld zone 2 comprises multiple weld spots in an array, multiple discrete weld spots, or multiple consecutive weld spots. A single weld spot in the array is irradiated by laser light, to bind the weld zone 2 to the rolled core by welding. Preferably, the multiple weld spots are consecutive weld spots, forming a straight line, an S shape or a U shape.

In an embodiment, each weld zone 2 comprises 8 or more weld spots, preferably 12 or more weld spots, and more preferably 16 or more weld spots.

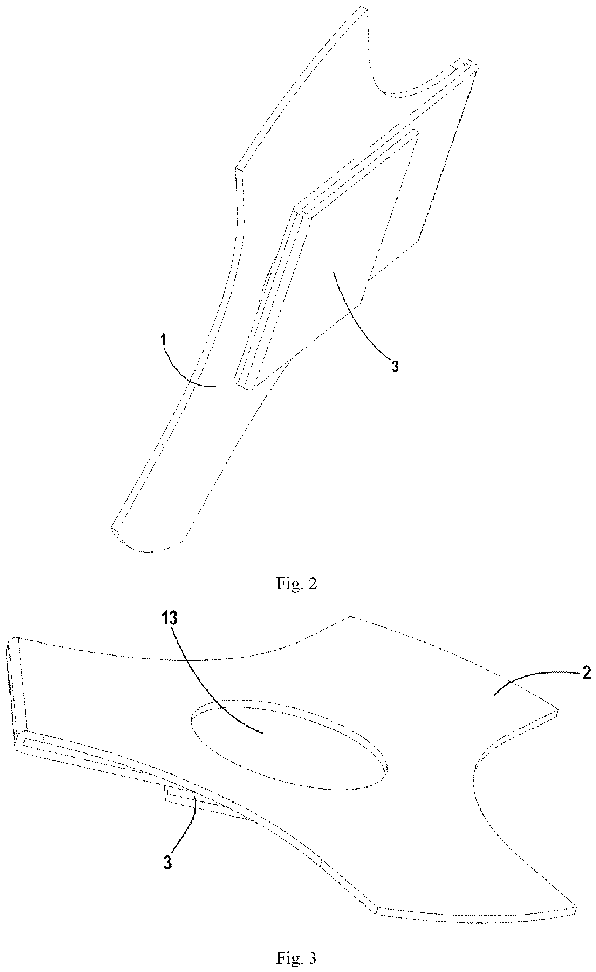

Now referring to Figs. 2 - 7, the current collector plate further comprises a current-leading plate 3 for leading out current, the current-leading plate 3 being connected to the current collector plate body 1. The current-leading plate 3 and the current collector plate body 1 may be of the same material or different materials. The current-leading plate 3 and the current collector plate body 1 may be integrally formed, or formed by welding. The function of the current-leading plate 3 is to lead current gathered by the current collector plate body 1 to the outside.

In the process of battery assembly, to reduce the height of a battery cap structure and maximize the capacity for active substances, the amount of space occupied by the current-leading plate 3 in the axial direction should be minimized. For example, as shown in Figs. 2 - 7, the current-leading plate 3 is connected to the current collector plate body 1 by means of a folded current-leading region, wherein the current-leading plate 3, the folded current-leading region and the current collector plate body 1 are stacked in succession. In addition to being able to increase the area of connection between the current-leading plate 3 and an end of the battery, this configuration also reduces the area occupied in the axial direction.

In one configuration of the current-leading plate, as shown in Figs. 3 - 7, the folded current-leading region comprises a first fold region 31, a second fold region 32 and a connecting region 33; the first fold region 31 foldably connects the connecting region 33 and the current-leading plate 3, and the second fold region 32 foldably connects the connecting region 33 and the current collector plate body 1. The two fold regions enable more effective connection to the connecting region 33 and the current-leading plate 3, and cause the folded current-leading region to function in a manner similar to a spring plate, tightly pressing against the current-leading plate 3 and the end of the battery more effectively due to opening stress.

In some situations, the battery will sometimes overheat, resulting in explosion of the rolled core, etc. It has been found through troubleshooting and experiment that overheating sometimes readily occurs when there is excessive current at the current collector plate, resulting in explosion of the rolled core, etc. To solve this problem, the folded current-leading region is provided with a fusible region with a reduced current-conducting area; the fusible region has increased resistance due to the reduction in the current-conducting area, and therefore heats up and melts through more easily, thus serving a safety function. The present utility model does not impose any specific limitations on the configuration of the fusible region, as long as the abovementioned function can be achieved.

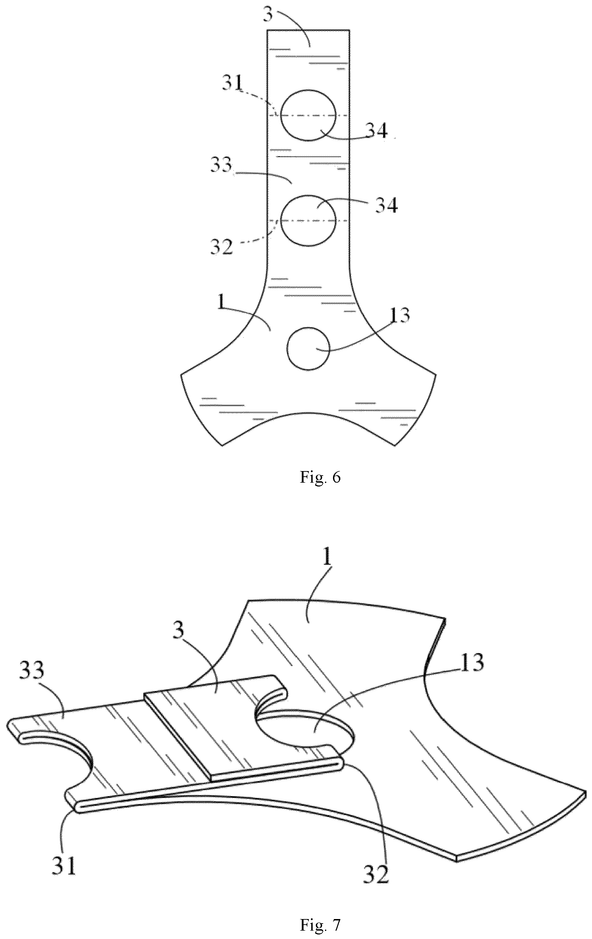

In an embodiment, as shown in Fig. 6, the current-leading plate 3 also comprises a weld zone 2. The weld zone 2 of the current-leading plate 3 and the weld zone 2 of the second face 12 are located on the same side or opposite sides of the current collector plate. For example, the position of the weld zone 2 on the current-leading plate depends on the number of folds; if folding produces an S shape, then the weld zone 2 is a back face, but if folding produces a C shape, then the weld zone 2 is a front face.

In an embodiment, as shown in Figs. 6-7, the current-leading plate 3 is connected to the current collector plate body 1 by means of a folded current-leading region, the folded current-leading region being provided with a fusible region with a reduced current-conducting area. For example, the folded current-leading region comprises a first fold region 31, a second fold region 32 and a connecting region 33.

In a preferred embodiment, the first fold region 31 and/or the second fold region 32 is/are provided with a through-hole 34, the through-hole extending to a portion adjoining the first fold region 31 and/or the second fold region 32; for example, the through-hole may span the fold region and the connecting region, or the fold region and the current-leading plate, enabling melt-through at a point of connection.

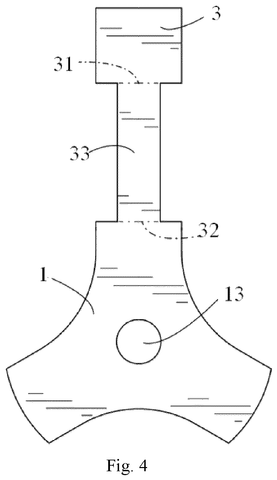

In an embodiment, as shown in Figs. 6-7, when the folded current-leading region is in a folded state, at least a partial region of the through-hole 34 overlaps the axial hole 13 of the current collector plate body 1 in the axial direction. Such a configuration facilitates the injection of electrolyte, preventing problems such as slow speed or diversion of injected liquid due to the current-leading plate. In another embodiment, as shown in Figs. 4-5, the connecting region 33 is a narrow region with a smaller current-conducting area than the current-leading plate 3. The current-leading plate 3 and the connecting region 3 may both be plate structures, and the connecting region 33 may have a smaller width than the current-leading plate 3, such that the cross-sectional area through which current flows is reduced, so that overheating and melt-through occur more easily at the connecting region 33.

In a particular embodiment, the first fold region 31 and the second fold region 32, as well as a narrow region extending between the first fold region 31 and the second fold region 32, are present between the current-leading plate 3 and the current collector plate body 1. The first fold region 31 separates the current-leading plate 3 from the narrow region, and the second fold region 32 separates the narrow region from the current collector plate body 1. Thus, the narrow region can form an overcurrent protection device, such as a fusible device, which is integral with the current-leading plate 3 and the current collector plate body 1, such that the narrow region can melt through in response to a current exceeding a predetermined value, and thereby interrupt the current between the current-leading plate 3 and the current collector plate body 1. For example, when the current exceeds a predetermined value (e.g. a rated current of a material forming the narrow region), the narrow region will melt through. In an embodiment, the predetermined value may be 101%, preferably 110%, and more preferably 120% of a nominal rated current of a battery unit.

In the process of battery assembly, to reduce the height of the battery cap structure and maximize the capacity for active substances, it is generally necessary to stack the current-leading plate 3 and the current collector plate body 1. This is achieved by bending in opposite directions at the first fold region 31 and the second fold region 32. In some embodiments, the first fold region 31 and the second fold region 32 each have a bending radius and/or tolerance that allows the current collector plate body 1 and the current-leading plate 3 to deform into an S shape. In some embodiments, the narrow region may be provided with an insulator (e.g. an insulating coating or thin insulating tape) on at least one surface thereof. Insulation of this type is used to prevent short-circuiting between the narrow region and the current collector plate body 1 or the current-leading plate 3.

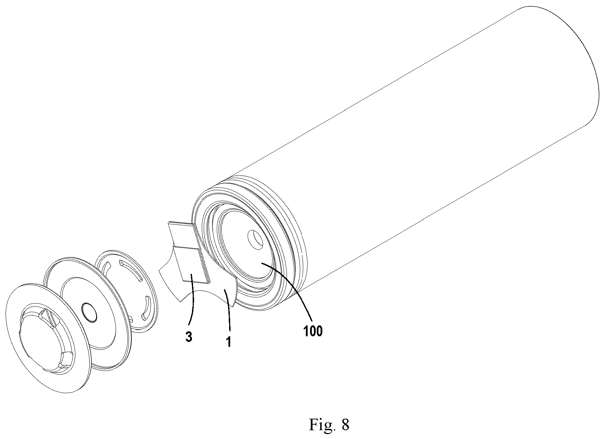

Now referring to Figs. 1 and 8, in another aspect of the present utility model, a battery is disclosed, comprising a rolled core 100 and the current collector plate 200, the current collector plate 200 being connected to the end of the rolled core 100 by laser welding. The current collector plate 200 is irradiated with laser light to form at least one weld spot 14, the weld spot 14 being located on surfaces of the current collector plate body 1 and the weld zone 2 that are fitted to one another. In another embodiment, multiple weld spots 14 may be formed on the current collector plate 200, wherein the multiple weld spots are arranged in rows and columns from the outside to the inside in the axial direction of the rolled core 100. In addition, the battery further comprises a casing, as well as a first-end terminal arranged at one side of the casing and a second-end terminal arranged at another side of the casing. The first-end terminal is connected to a negative electrode of the rolled core 100 by means of a negative electrode current collector plate; the second-end terminal is connected to a positive electrode of the rolled core 100 by means of the current-leading plate 3 and the current collector plate body 1.

As shown in Figs. 1 and 8, the casing generally provides a casing for electrical elements (e.g. the rolled core 100, the first-end terminal, the negative electrode current collector plate, the second-end terminal, the current collector plate 200 and/or similar elements) of the battery unit. In some embodiments, some or all of the electrical elements are installed in the casing. In some embodiments, the casing is made of an insulating material, e.g. plastic or another electrically nonconductive material. In some embodiments, the casing may be made of an electrically conductive material, e.g. steel, aluminum or another electrically conductive metal.

Now referring to Fig. 1, in another aspect of the present utility model, a method for preparing a battery current collector plate is disclosed, wherein a current collector plate body 1 is subjected to a hydrophilic treatment to reduce the laser reflectivity of a surface of the current collector plate, and increase the utilization rate of laser energy.

In a particular embodiment, the hydrophilic treatment is performed by forming a weld zone 2 on a surface of the current collector plate body 1, specifically comprising: making up an inorganic coating for forming the weld zone 2, making up a solvent from an alcohol and water in the ratio 1 : 5 - 5 : 1, selecting a mixture of the inorganic metal coating and/or inorganic non-metal coating according to the present utility model and said solvent in a mass ratio of 1 : 1 - 1 : 5, and performing treatment in a constant-temperature water bath at 20°C - 80°C, stirring thoroughly and maintaining the temperature to obtain an inorganic sol coating. A passivating liquid for metal surface treatment is used to subject a second face 12 of the current collector plate body 1 to passivation treatment for 4 - 8 hours at a temperature of 60°C - 100°C, wherein the passivating liquid for metal surface treatment may be purchased commercially. The inorganic sol coating is loaded on the passivated second face 12, wherein forms of loading include but are not limited to film-coating, spray-coating and dip-coating of the surface of the current collector plate body 1, bonding thereto, etc. Drying is then performed at a temperature of 80 - 120°C for 10 - 14 hours, and the loading and drying steps are repeated 1-3 times to obtain the weld zone 2 covering the second face of the current collector plate body 1. In an embodiment, the thickness of the weld zone 2 is less than 10% of the thickness of the current collector plate body 1, preferably less than 8% of the thickness of the current collector plate body 1, more preferably less than 5% of the thickness of the current collector plate body 1, and most preferably less than 3% of the thickness of the current collector plate body 1.

In an embodiment, the current collector plate described above may be arranged at a positive electrode or a negative electrode of the battery. Now referring to Figs. 1 and 8, in another aspect of the present utility model, a method for preparing a battery is disclosed: components such as a casing, a negative electrode current collector plate and a rolled core 100 are stacked in a direction perpendicular to a bottom face of the casing, wherein the negative electrode current collector plate and the rolled core 100 overlap on an axis of the rolled core 100 and are fitted together by pressing tightly with a fixing member, and a laser welding operation is performed. The wavelength and power of laser emission, the laser diameter and the laser welding time are controlled, so as to precisely focus laser energy through the axis of the rolled core 100 to a surface of the negative electrode current collector plate, realizing an operation of melting the current collector plate surface. When the laser welding operation has been completed, the welded components are subjected to treatment by maintaining their temperature, so as to guarantee the robustness of the weld, to ensure that the welded structure is more stable. At the same time, the operating power is slowly reduced, and the temperature is allowed to gradually fall to room temperature, so as to prevent brittle fracturing of the welded structure, and achieve a reliable weld between the casing and the negative electrode current collector plate. When the assembly process described above has been completed, a first face 11 of the current collector plate body 1 is fitted to a positive electrode surface of the rolled core 100, the axis of the rolled core 100 and an axial hole 13 of the current collector plate body 1 are aligned and pressed tightly, and a laser welding operation is performed on a weld zone 2 of a second face 12 of the current collector plate body 1. In an embodiment, when the material of the current collector plate body 1 is chosen to be aluminum, an appropriate laser frequency may be chosen to be 1 - 100 Hz, preferably 2 - 80 Hz, more preferably 10 - 60 Hz, and most preferably 30 - 50 Hz. At the same time, a laser beam irradiation time and power may also be adjusted adaptively. If the component to be irradiated has a lower melting point and more precise structural control is needed, radiation energy of a lower power may be used while adaptively prolonging the irradiation time, so as to ensure that welding takes place to the fullest extent. Energy from the laser light is received with high efficiency via the weld zone 2, enabling the current collector plate body 1 to be melted effectively, without further damaging the rolled core. When laser welding of the positive electrode has been completed, electrolyte injection treatment is performed, the current collector plate body and the current-leading plate are subjected to bending operations according to any one of the embodiments above, a positive electrode terminal is used to cover the top of the current-leading plate and the battery is sealed, thereby obtaining a battery structure.

The above description of various embodiments of the present disclosure is provided to a person skilled in the art for descriptive purposes. The present utility model is not intended to be exclusive or limited to a single disclosed embodiment. Based on the above, a person skilled in the field of the above teaching will understand various substitutes for and variants of the present utility model. Therefore, although some alternative embodiments have been specifically described, a person skilled in the art will understand, or develop with relative ease, other embodiments. The present disclosure is intended to include all alternatives, modifications and variants of the present utility model described here, as well as other embodiments falling within the spirit and scope of the present utility model described above.

## Claims

1. Battery current collector plate, **characterized in that** the current collector plate (200) comprises a current collector plate body (1), the current collector plate body (1) having a first face (11) for contacting an end of a rolled core (100), and a second face (12) opposite the first face (11);
at least a portion of the second face (12) is provided with a weld zone (2), the weld zone (2) being configured to cause a portion of the first face (11) corresponding to the weld zone (2) to be connected by welding to the end of the rolled core (100) when the weld zone is irradiated by laser light;
the weld zone (2) has a lower laser reflectivity than the first face (11).

2. Battery current collector plate according to Claim 1, **characterized in that** the weld zone (2) is hydrophilic.

3. Battery current collector plate according to Claim 2, **characterized in that** the weld zone (2) is at least a portion of the second face (12) that has undergone a hydrophilic treatment, the hydrophilic treatment comprising applying a plating layer, a spray-coating layer, a dip-coating layer or a bonded layer, performing a plasma treatment, or performing an oxidation treatment.

4. Battery current collector plate according to Claim 3, **characterized in that** a material of the plating layer, spray-coating layer, dip-coating layer or bonded layer is selected from an inorganic material, the inorganic material being selected from one of magnesium oxide, silicon oxide, zirconium oxide, titanate and magnesium aluminum fluoride;
a material of the current collector plate body (1) is selected from copper, tin or aluminum.

5. Battery current collector plate according to Claim 1, **characterized in that** an axial hole (13) is provided in a middle part of the current collector plate body (1), the weld zone (2) being arranged around the axial hole (13).

6. Battery current collector plate according to Claim 5, **characterized in that** the weld zone (2) is multiple weld zones, which are distributed at an outer side of the axial hole (13) in a centrosymmetric manner.

7. Battery current collector plate according to any one of Claims 1 - 6, **characterized in that** the current collector plate further comprises a current-leading plate (3) for leading out current, the current-leading plate (3) being connected to the current collector plate body (1).

8. Battery current collector plate according to Claim 7, **characterized in that** the current-leading plate (3) also comprises a weld zone (2).

9. Battery current collector plate according to Claim 8, **characterized in that** the weld zone (2) of the current-leading plate (3) and the weld zone (2) of the second face (12) are located on the same side or opposite sides of the current collector plate.

10. Battery current collector plate according to Claim 9, **characterized in that** the current-leading plate (3) is connected to the current collector plate body (1) by means of a folded current-leading region, the folded current-leading region being provided with a fusible region with a reduced current-conducting area.

11. Battery current collector plate according to Claim 10, **characterized in that** the folded current-leading region comprises a first fold region (31), a second fold region (32) and a connecting region (33); the first fold region (31) foldably connects the connecting region (33) and the current-leading plate (3), and the second fold region (32) foldably connects the connecting region (33) and the current collector plate body (1).

12. Battery current collector plate according to Claim 11, **characterized in that** the first fold region (31) and/or the second fold region (32) is/are provided with a through-hole (34), the through-hole extending to a portion adjoining the first fold region (31) and/or the second fold region (32);
when the folded current-leading region is in a folded state, at least a partial region of the through-hole (34) overlaps the axial hole (13) of the current collector plate body (1) in an axial direction.

13. Battery current collector plate according to any one of Claims 7 - 9, **characterized in that** the current-leading plate (3) comprises a narrow region, the narrow region being provided with an insulator on at least one surface thereof, to prevent short-circuiting between the narrow region and the current collector plate body (1) or the current-leading plate (3).

14. Battery current collector plate according to Claim 13, **characterized in that** the insulator is insulating tape or an insulating coating formed on at least one surface.

15. Battery, **characterized in that** the battery comprises a rolled core (100), and the current collector plate (200) according to any one of Claims 1 - 12, the current collector plate (200) being connected to an end of the rolled core (100) by laser welding; preferably, multiple weld spots (14) are formed on the current collector plate (200) by irradiation with laser light, the multiple weld spots being discrete weld spots forming multiple rows; preferably, multiple weld spots (14) are formed on the current collector plate (200), the multiple weld spots being consecutive weld spots, and forming a straight line, an S shape or a U shape.
